# EUROPÄISCHE PATENTSCHRIFT

(11) **EP 3 840 196 B1**
(45) Veröffentlichungstag und Bekanntmachung des Hinweises auf die Patenterteilung: **31.01.2024**
(21) Anmeldenummer: 20216034.7
(22) Anmeldetag: 21.12.2020
(51) Int. Cl.: H02K 15/00

(54) **VORRICHTUNG ZUM MASKIEREN UND VERSPANNEN VON ZU VERSCHWEISSENDEN HAIRPIN-ANORDNUNGEN EINES STATORS, SYSTEM AUS STATOR UND VORRICHTUNG SOWIE VERFAHREN ZUM VERBINDEN EINES OBEREN ABSCHNITTS DER HAIRPIN-ANORDNUNGEN**
DEVICE FOR MASKING AND BRACING THE HAIRPIN ARRANGEMENTS OF A STATOR TO BE WELDED, SYSTEM OF STATOR AND DEVICE AND METHOD FOR CONNECTING AN UPPER SECTION OF THE HAIRPIN ARRANGEMENTS
DISPOSITIF DE MASQUAGE ET DE SERRAGE DES AGENCEMENTS EN ÉPINGLE À CHEVEUX D'UN STATOR À SOUDER, SYSTÈME COMPRENANT UN STATOR ET UN DISPOSITIF, AINSI QUE PROCÉDÉ DE RACCORDEMENT D'UNE SECTION SUPÉRIEURE DES AGENCEMENTS EN ÉPINGLE À CHEVEUX

(30) Priorität: 19.12.2019 DE 102019135326
(43) Veröffentlichungstag der Anmeldung: 23.06.2021
(73) Patentinhaber: Gehring Technologies GmbH + Co. KG, 73760 Ostfildern (DE)
(72) Erfinder: Bäder, Christoph, 73776 Altbach (DE)
(74) Vertreter: DREISS Patentanwälte PartG mbB

(56) Entgegenhaltungen:
- WO-A1-2018/185620
- DE-A1-102018 202 381
- JP-A- 2015 171 260
- US-A1- 2014 007 415

## Beschreibung

Die Erfindung betrifft eine Vorrichtung zum zeitgleichen Maskieren und Verspannen von mehreren zu verschweißenden Hairpin-Anordnungen eines Stators. Ferner betrifft die Erfindung ein Verfahren zum Verbinden eines oberen Abschnitts von Hairpin-Anordnungen eines Stators mittels eines Schweißvorgangs. Außerdem betrifft die Erfindung ein System aus einem Stator und einer solchen Vorrichtung.

Statoren finden in elektrodynamischen Maschinen, beispielsweise in Elektromotoren, Verwendung. Bei der Fertigung von elektromechanischen Wandlern, insbesondere Elektromotoren, insbesondere für Traktionsantriebe, werden einzelne Wicklungselemente (Steckspulen, sogenannte "Hairpins") hergestellt, die im weiteren Prozess zu einer Statorwicklung weiterverarbeitet bzw. verbunden werden.

Um bedingt durch höheren Füllungsgrad eine höhere Effizienz von Elektromaschinen zu erreichen, ist man in der Hairpin-Technologie von runden auf rechteckige Leiterquerschnitte übergegangen. Im Rahmen der Erfindung jedoch ist die Verwendung von beliebigen Leiterquerschnitten möglich, also beispielsweise runden oder rechteckigen Querschnitten. Im Rahmen der Herstellung der Wicklungselemente werden aus Endlosmaterial entsprechende Leiterstücke abgetrennt und zu geeigneten Wicklungselementen umgeformt. Anschließend werden die Wicklungselemente nach einer Positionierung am Stator an ihren oberen Enden miteinander, leitend, insbesondere stoffschlüssig, verbunden, insbesondere verschweißt.

Um dieses Verbinden/Verschweißen sicher und reproduzierbar zu gestalten, müssen miteinander zu verschweißende Hairpins in einer genau definierten Position zueinander positioniert werden, um deren gewünschten Kontakt miteinander sicherzustellen. Des Weiteren ist es gewünscht, den Bereich um die miteinander zu verschweißenden Enden der Hairpins herum abzudecken bzw. zu maskieren, um zu verhindern, dass Schweißperlen oder beim Schweißvorgang entstehendes Abfallmaterial die übrigen Abschnitte der Hairpins kontaktiert und möglicherweise beschädigt. Das Verschweißen der Hairpins erfolgt in einem abisolierten Bereich, in darunterliegenden Bereichen weisen die Hairpins eine üblicherweise aus Kunststoff bestehende Isolierung auf, die durch starke Hitzeeinwirkung beschädigt werden kann. Bei der Hairpin-Technologie liegen zwei Leiterelemente einstückig als U-förmiger Draht vor, ähnlich einer klassischen Haarnadel (engl. hairpin).

Bei der üblicherweise vorgesehenen Zweischichtwicklung werden die Enden zweier einzelner Leiterelemente, nachfolgend zwei Leiterelementenden genannt, beziehungsweise zwei Enden zweier unterschiedlicher Hairpins, im Folgenden zwei Enden eines Hairpin-Paares genannt, zusammengeschweißt. Zuvor werden die beiden zu verschweißenden Leiterelementenden beziehungsweise Enden eines Hairpin-Paares abisoliert und mit Hilfe einer Spannvorrichtung zueinander positioniert bzw. verspannt. Die relative Positionierung erfolgt entsprechend ihrer nach dem Schweißvorgang, das heißt im fertiggestellten Stator, gewünschten relativen Anordnung. Üblicherweise ist zudem eine Maskiervorrichtung vorgesehen. Durch diese soll vermieden werden, dass durch Schweißfunken oder heiße Metallteilchen, die während des Schweißvorgangs anfallen, der Stator oder die Isolation der Leiter beschädigt und/oder dessen Funktionalität zerstört wird.

Die Dokumente US2014/007415 A1, DE102018202381 A1, WO2018/185620 A1, JP2015171260 A offenbaren Vorrichtungen und Verfahren zum Ausrichten und Maskieren der Leiterelemente bzw. Hairpins von Statoren vor einem Schweißvorgang nach dem Stand der Technik.

Im Stand der Technik sind zahlreiche Vorrichtungen und Verfahren zum Ausrichten und Maskieren der Leiterelemente bzw. Hairpins von Statoren vor einem Schweißvorgang bekannt.

Nachfolgend werden drei vorbekannte Vorrichtungen und Verfahren für Statoren beschrieben, die nach der Hairpin-Technologie gefertigt sind.

Beispielsweise werden einzelne Statorsegmente innerhalb eines Schweißrings der Reihe nach verspannt und maskiert. Dazu werden unter anderem Spannstifte eingesetzt, welche radial in das jeweilige Statorsegment eingefahren werden und die Enden der einzelnen Hairpin-Paare zueinander positionieren. Ergänzend dazu weist ein flächig ausgebildetes Maskierblech, das über dem nicht in Bearbeitung befindlichen Teil des Stators angeordnet ist, eine Anschlagfläche für die zu spannenden Hairpin-Paare auf.

Alternativ sind eine Vollspannung und eine Vollmaskierung möglich. Dazu werden in einer Variante die zu verschweißenden Enden der Hairpin-Paare in zwei, jeweils mit Durchgängen versehene und übereinander angeordnete Deckbleche aufgenommen. Anschließend erfolgt die tangentiale und radiale Ausrichtung der Enden der Hairpin-Paare, indem die Deckbleche gegeneinander verdreht werden. In der Endposition kontaktieren die Innenseiten der Durchgänge die Enden der Hairpin-Paare in Umfangsrichtung.

Eine andere bekannte Ausführung der Vollspannung und Vollmaskierung sieht Blechstreifen mit Durchgängen für die zu verschweißenden Enden der Hairpin-Paare vor. Es wird jeweils eine radiale Reihe an Hairpin-Paaren in die Durchgänge zweier übereinander angeordneter Streifen aufgenommen. Dann werden die Bleche radial gegeneinander verschoben.

Bei Methoden der Vollspannung und Vollmaskierung besteht das Risiko, dass beim Schweißen anfallende Metallteilchen den Verdrehmechanismus blockieren können. Die Öffnungen in den jeweiligen Maskierungen sind außerdem auf bestimmte Querschnittsgeometrien der zu verschweißenden Hairpins abgestimmt.

Die im Stand der Technik beschriebenen Vorrichtungen und Verfahren als relativ komplex, arbeits- und kostenintensiv und störungsanfällig. Die Meisten bekannten Arten der Maskierung weisen Einschränkungen hinsichtlich der Querschnittsgeometrien der Hairpins, der Anzahl der zeitgleich ausrichtbaren und/oder verschweißbaren Hairpin-Paare und/oder der Anzahl der bearbeitbaren Schweißringe auf.

Der Erfindung liegt daher die Aufgabe zugrunde, Nachteile des Standes der Technik zu überwinden und eine Vorrichtung sowie ein Verfahren zur Verfügung zu stellen, mit denen der Schweißvorgang bei der Herstellung eines Stators, umfassend Hairpins, einfach, kostengünstig, schnell, zuverlässig, flexibel und reproduzierbar vorbereitet und durchgeführt werden kann.

Gelöst wird die Aufgabe durch eine Vorrichtung nach Anspruch 1. Die Vorrichtung dient zum zeitgleichen Maskieren und Verspannen von mehreren zu verschweißenden Hairpin-Anordnungen, insbesondere Hairpin-Paaren, eines Stators, wobei
(i) die mehreren Hairpin-Anordnungen in einer Umfangsrichtung verteilt auf mehreren konzentrisch zueinander angeordneten Kreisbahnen oder auf Abschnitten von konzentrischen Kreisbahnen angeordnet sind, so dass
(ii) die Hairpin-Anordnungen in radial ausgerichteten Reihen angeordnet sind, die in Umfangsrichtung über in radialer Richtung verlaufende Radialspalte zueinander beabstandet sind, und wobei
(iii) die einzelnen Hairpin-Anordnungen in einer radial ausgerichteten Reihe in radialer Richtung zueinander über zwischen den konzentrisch zueinander angeordneten Kreisbahnen verlaufende Ringspalte beabstandet sind,
wobei die Vorrichtung aufweist:
(a) eine Positioniereinheit zur Positionierung der Vorrichtung bezüglich des zu bearbeitenden Stators;
(b) eine Maskiereinheit, die mehrere Öffnungen zum Aufnehmen jeweils einer der mehreren in der radial ausgerichteten Reihe angeordneten Hairpin-Anordnungen aufweist, wobei die mehreren Öffnungen von einander in radialer Richtung gegenüberliegenden und in Umfangsrichtung verlaufenden Umfangseiten und einander in Umfangsrichtung gegenüberliegenden und in radialer Richtung verlaufenden Radialseiten der Maskiereinheit begrenzt werden;
(c) eine Betätigungseinheit, die relativ zu der Positioniereinheit beweglich ausgebildet ist,
(d) eine erste Kopplungseinheit, mittels der die Betätigungseinheit und die Positioniereinheit derart mit der Maskiereinheit wirkverbunden gekoppelt sind, dass eine Relativbewegung zwischen der Positioniereinheit und der Betätigungseinheit eine Bewegung der Umfangseiten in radialer Richtung aufeinander zu bewirkt, um die in den Öffnungen aufgenommenen Hairpin-Anordnungen in radialer Richtung zu maskieren und zu verspannen, und
(e) eine zweite Kopplungseinheit, mittels der die Betätigungseinheit und die Positioniereinheit derart mit der Maskiereinheit wirkverbunden gekoppelt sind, dass die Relativbewegung zwischen der Positioniereinheit und der Betätigungseinheit eine Bewegung der Radialseiten in Umfangsrichtung aufeinander zu bewirkt, um in den Öffnungen aufgenommene Hairpin-Anordnungen in Umfangsrichtung zu maskieren und zu verspannen.

Dementsprechend können die Hairpin-Anordnungen in einer radial ausgerichteten Reihe in radialer Richtung und in Kreisbahnen in Umfangsrichtung mittels einer Relativbewegung zwischen der Positioniereinheit und der Betätigungseinheit zeitgleich verspannt und maskiert werden. Werden Betätigungseinheit und Positioniereinheit relativ zueinander bewegt so bewirkt die Kopplung mit den Rändern der Öffnungen, dass diese ihre Lichte weite in Umfangsrichtung und in Radialrichtung reduzieren. Die Vorrichtung kann derart ausgebildet sein, dass ein Aufbringen einer in axialer Richtung wirkenden Druckkraft auf die Positioniereinheit genügt, um die Relativbewegung zu bewirken. Die Vorrichtung kann entlang der Umfangsrichtung an dem Stator von den Hairpin-Anordnungen einer radial ausgerichteten Reihe zu den Hairpin-Anordnungen der dieser benachbarten radial ausgerichteten Reihe bewegt werden, um so sämtliche Hairpin-Anordnungen des Stators nacheinander für den Schweißvorgang zu verspannen und zu maskieren. Durch den Aufbau der Vorrichtung mit der ersten Kopplungseinheit und der zweiten Kopplungseinheit zum Verspannen der Hairpin-Anordnungen in Umfangsrichtung und radialer Richtung ist die Vorrichtung kompakt und für verschiedene Hairpingeometrien einsetzbar, bzw. Abweichungen von Sollgeometrien der Hairpins können ausgeglichen werden. Sie ermöglicht eine einfache, schnelle, zuverlässige und reproduzierbare Verspannung und Maskierung der einzelnen Hairpin-Anordnungen.

Die Öffnungen können insbesondere rechteckig ausgebildet sein. Dadurch lassen sich Hairpins mit rundem oder rechteckigem Querschnitt gleichmäßig von jeder Seite verspannen.

Die erste Kopplungseinhei weist zumindest ein erstes Kopplungsglied auf, das insbesondere schwenkbar an der Positioniereinheit angelenkt ist.

Es kann vorgesehen sein, dass die Betätigungseinheit mit zumindest einer Anschlagfläche ausgebildet ist, wobei die Positioniereinheit gegenüber der Betätigungseinheit in der axialen Richtung bewegbar ausgebildet ist.

Es kann vorgesehen sein, dass die Maskiereinheit an der Betätigungseinheit in axialer Richtung ortsfest angeordnet ist, und wobei die Maskiereinheit mittels des zumindest einen ersten Kopplungsglieds derart mit der Positioniereinheit wirkverbunden ist, dass die Relativbewegung der Positioniereinheit in axialer Richtung zu der zumindest einen Anschlagfläche der Betätigungseinheit die Bewegung der Umfangseiten in radialer Richtung aufeinander zu bewirkt, um die in den Öffnungen aufgenommenen Hairpin-Anordnungen in radialer Richtung zu maskieren und zu verspannen.

Demgemäß kann durch einfaches Anlegen der zumindest einen Anschlagfläche der Betätigungseinheit an den Stator oder einen Anschlag die Relativbewegung der Positioniereinheit zu der Betätigungseinheit durch Bewegen der Positioniereinheit gegen die angelegte Betätigungseinheit erzielt werden. Die erste die erste Kopplungseinheit bzw. das zumindest eine erste Kopplungsglied bewirkt dadurch die Bewegung der Umfangseiten in radialer Richtung aufeinander zu. Das zumindest eine erste Kopplungsglied kann insbesondere als Kopplungsstange ausgebildet sein. Die zumindest eine Kopplungsstange kann mittels eines Drehgelenks schwenkbar an der Positioniereinheit angeordnet sein. Insbesondere kann die Betätigungseinheit zwei Anschlagflächen aufweisen, die beide zur Anlage an dem Stator oder dem Anschlag vorgesehen sind. Hierzu kann die Betätigungseinheit mit zwei Betätigungswandungen ausgebildet sein, die einander in radialer Richtung gegenüberliegen. Unterseiten der Betätigungswandungen sind dann die Anschlagflächen. Zwischen den Betätigungswandungen kann die Maskiereinheit angeordnet sein. Die Maskiereinheit kann zudem an zumindest einer der beiden Betätigungswandungen angeordnet sein.

Dabei kann vorgesehen sein, dass die erste Kopplungseinheit zwei erste Kopplungsglieder aufweist, die insbesondere schwenkbar an der Positioniereinheit angelenkt sind, wobei die Positioniereinheit in radialer Richtung zwischen den zwei ersten Kopplungsgliedern angeordnet ist. Es kann vorgesehen sein, dass nur ein erstes Kopplungsglied vorgesehen ist, und nur eine der beiden Umfangseiten in radialer Richtung auf die andere der beiden Umfangseiten zubewegt wird während die andere Umfangseite stationär verbleibt. Die Vorrichtung kann mit zwei ersten Kopplungsgliedern ausgebildet sein, die insbesondere einander in radialer Richtung gegenüber liegend angeordnet sein können. Diese können derart mit den beiden Umfangseiten wirkverbunden sein, dass beide Umfangseiten mittels je eines der ersten Kopplungsglieder bewegt wird, so dass sie sich aufeinander zu bewegen. Dies ermöglicht eine besonders präzise und zuverlässige Verspannung der Hairpin-Anordnungen in radialer Richtung.

Auch kann dabei vorgesehen sein, dass das zumindest eine erste Kopplungsglied mittels zumindest eines Kniehebelspanners mit der Maskiereinheit wirkverbunden ist. Bei zwei ersten Kopplungsglieder kann jedes der ersten Kopplungsglieder mittels je eines Kniehebelspanners mit der Maskiereinheit wirkverbunden sein. Die Kniehebelspanner können ausgebildet sein, um eine durch Relativbewegung zwischen der Betätigungseinheit und der Positioniereinheit bewirkte Bewegung der ersten Kopplungsglieder (bspw. eine Schwenkbewegung) in eine translatorische Bewegung der Umfangseiten in radialer Richtung aufeinander zu bewirken. Ein Kniehebelspanner kann insbesondere drei Drehgelenke aufweisen, die derart miteinander wirkverbunden sind, dass eine Bewegung des damit verbundenen ersten Kopplungsglieds mittels Drehung der drei Drehgelenke eine translatorische Bewegung einer damit wirkverbundenen Umfangseite auf die andere Umfangseite zu bewirkt. Eines erstes der drei Drehgelenke kann dazu ortsfest an der Vorrichtung, insbesondere an der Betätigungseinheit, befestigt sein. Ein zweites der drei Drehgelenke kann zwischen dem ersten Drehgelenk und einem dritten Drehgelenk der drei Drehgelenke angeordnet sein. Das erste und das zweite Drehgelenk sowie das zweite und das dritte Drehgelenk sind typischerweise jeweils in einem festen Abstand miteinander verbunden. Für die feste Verbindung kann der Kniehebelspanner zwei Verbindungselemente mit jeweils zwei Ausnehmungen aufweisen, in der die Drehgelenke angeordnet sind. Das zweite Drehgelenk kann die zwei Verbindungselemente miteinander verbinden, in dem es in je einer Ausnehmung beider Verbindungselemente angeordnet ist.

Zwischen dem ersten Kopplungsglied und dem Kniehebelspanner kann eine Federung zum Ausgleich möglicher Toleranzen bezüglich von Dicken der Hairpins, die in radialer Richtung gemessen werden, vorgesehen werden.

Es kann vorgesehen sein, dass die Maskiereinheit zumindest einen Positionierbolzen aufweist, der eine der zwei Umfangseiten aufweist, wobei die erste Kopplungseinheit, insbesondere über den zumindest einen Kniehebelspanner, derart mit dem zumindest einen Positionierbolzen wirkverbunden ist, dass bei der Relativbewegung zwischen der Positioniereinheit und der Betätigungseinheit der zumindest eine Positionierbolzen in radialer Richtung mittels der ersten Kopplungseinheit, insbesondere mittels des Kniehebelspanners, eine Bewegung der Umfangseite des zumindest einen Positionierbolzens in radialer Richtung auf die andere Umfangseite bewirkt, um die in den Öffnungen aufgenommenen Hairpin-Anordnungen in radialer Richtung zu maskieren und zu verspannen.

Insbesondere kann die Maskiereinheit zwei Positionierbolzen aufweisen, die jeweils eine der zwei Umfangseiten aufweisen, wobei jeweils einer von zwei Kniehebelspannern derart mit je einem der Positionierbolzen wirkverbunden ist, dass bei der Relativbewegung zwischen der Positioniereinheit und der Betätigungseinheit die Positionierbolzen in radialer Richtung mittels der Kniehebelspanner eine Bewegung der Umfangseiten der Positionierbolzen in radialer Richtung aufeinander zu bewirken, um die in den Öffnungen aufgenommenen Hairpin-Anordnungen in radialer Richtung zu maskieren und zu verspannen. Dies ermöglicht eine besonders präzise und zuverlässige Verspannung der Hairpin-Anordnungen in radialer Richtung. Der Positionierbolzen kann insbesondere mit dem dritten Drehgelenk des Kniehebelspanners verbunden sein. Typischerweise ist der Positionierbolzen derart geführt gelagert, dass er eine translatorische Bewegung ausführen kann und dadurch ein definiertes Verspannen der Hairpin-Anordnungen erzielt.

Es kann vorgesehen sein, dass die Vorrichtung einen Rahmen aufweist, der fest mit der Betätigungseinheit verbunden ist, wobei der zumindest eine Kniehebelspanner fest mit dem Rahmen verbunden ist. Insbesondere kann das erste der drei Drehgelenke des zumindest einen Kniehebelspanners fest mit dem Rahmen verbunden sein. Wenn zwei Kniehebelspanner vorgesehen sind, können beiden Kniehebelspanner, insbesondere deren erste Drehgelenke, fest mit dem Rahmen verbunden sein. Der Kniehebelspanner bzw. dessen mit der Betätigungseinheit verbundenes Drehgelenk kann entsprechend mit in Bezug auf die Betätigungseinheit ortsfest gehalten sein. Das dritte Drehgelenk kann in radialer Richtung gegenüber dem ersten Drehgelenk translatorisch bewegbar sein.

Ferner kann vorgesehen sein, dass die Maskiereinheit zumindest einen Abstandhalter aufweist, der zwischen den Umfangseiten angeordnet ist, und dazu eingerichtet ist, in den Ringspalten positioniert zu werden und die in den Öffnungen aufgenommenen Hairpin-Anordnungen in radialer Richtung zu verspannen. Dies ermöglicht es, mehrere Hairpin-Anordnungen in einer radial ausgerichteten Reihe auf Abstand zu einander zu halten und miteinander zu verspannen. Wird nur ein Abstandhalter verwendet, können so beispielsweise zwei Hairpin-Anordnungen in einer radial ausgerichteten Reihe verwendet werden. Insbesondere kann aber vorgesehen sein, mehrere Abstandhalter vorzusehen. Ganz besonders ist es möglich, n-1 Abstandhalter vorzusehen, wobei n die Anzahl an Hairpin-Anordnungen in den radial ausgerichteten Reihen des Stators ist.

Dabei kann vorgesehen sein, dass die Abstandhalter in radialer Richtung mit einem Spiel an der Maskiereinheit angeordnet sind. Dies ermöglicht einen Toleranzausgleich von unterschiedlichen Dicken der Hairpins. Die Dicken der Hairpins werden dabei in radialer Richtung gemessen.

Weiterhin ist vorgesehen, dass
(a) die zweite Kopplungseinheit zumindest ein zweites Kopplungsglied aufweist,
(b) die Betätigungseinheit mit zumindest einer Anschlagfläche ausgebildet ist, wobei die Positioniereinheit gegenüber der Betätigungseinheit in der axialen Richtung bewegbar ausgebildet ist, und
(c) die Maskiereinheit an der Betätigungseinheit in axialer Richtung ortsfest angeordnet ist, und wobei die Maskiereinheit mittels des zumindest einen zweiten Kopplungsglieds derart mit der Positioniereinheit wirkverbunden ist, dass die Relativbewegung der Positioniereinheit in axialer Richtung zu der zumindest einen Anschlagfläche der Betätigungseinheit die Bewegung der Radialseiten in Umfangrichtung aufeinander zu bewirkt, um in den Öffnungen aufgenommene Hairpin-Anordnungen in Umfangsrichtung zu maskieren und zu verspannen.

Demgemäß kann durch einfaches Anlegen der zumindest einen Anschlagfläche der Betätigungseinheit an den Stator oder einen (separat davon bereitgestellten) Anschlag die Relativbewegung der Positioniereinheit zu der Betätigungseinheit durch Bewegen der Positioniereinheit gegen die angelegte Betätigungseinheit durch Aufbringen einer axialen Druckkraft auf die Positioniereinheit erzielt werden. Das zumindest eine zweite Kopplungsglied bewirkt dadurch die Bewegung der Umfangseiten in radialer Richtung aufeinander zu. Insbesondere kann die Betätigungseinheit zwei Anschlagflächen aufweisen, die beide an dem Stator oder dem Anschlag angelegt werden müssen. Hierzu kann die Betätigungseinheit mit zwei Betätigungswandungen ausgebildet sein, die einander in radialer Richtung gegenüberliegen. Die Unterseiten der Betätigungswandungen weisen dann die Anschlagflächen auf. Zwischen den Betätigungswandungen kann die Maskiereinheit angeordnet sein. Die Maskiereinheit kann zudem an zumindest einer der beiden Betätigungswandungen angeordnet sein.

Dabei kann vorgesehen sein, dass das zumindest eine zweite Kopplungsglied sich von der Positioniereinheit in axialer Richtung zu der Maskiereinheit erstreckt. Das zumindest eine zweite Kopplungsglied kann insbesondere als eine Kopplungswandung ausgebildet sein. Die zumindest eine Kopplungswandung kann eine, insbesondere in axialer Richtung verlaufende, zweite Führung, insbesondere eine zweite Ausnehmung, für einen der Positionierbolzen aufweisen. Die zweite Ausnehmung kann als ein Schlitz ausgebildet sein.

Dabei kann außerdem vorgesehen sein, dass das zumindest eine zweite Kopplungsglied als eine Kulissenführung mit zumindest einer ersten Führung ausgebildet ist, in der zumindest ein Führungsbolzen der Maskiereinheit geführt ist. Insbesondere kann die Kulissenführung zwei erste Führungen aufweisen. In jeder der zwei ersten Führungen kann jeweils ein Führungsbolzen geführt sein. Die Kulissenführung kann in der Kopplungswandung ausgebildet sein. Die zumindest eine erste Führung kann als eine erste Ausnehmung in der Kopplungswandung ausgebildet sein. Insbesondere kann die erste Ausnehmung als ein Schlitz ausgebildet sein.

Hierbei kann vorgesehen sein, dass der zumindest eine Führungsbolzen mit einer ersten inneren Radialwandung von zwei einander in Umfangsrichtung gegenüberliegenden inneren Radialwandungen der Maskiereinheit verbunden ist, wobei die inneren Radialwandungen dazu eingerichtet sind, in den Radialspalten positioniert zu werden, und wobei die erste innere Radialwandung der zwei inneren Radialwandungen eine erste Radialseite der zwei Radialseiten aufweist und eine zweite innere Radialwandung der zwei inneren Radialwandungen eine zweite Radialseite der zwei Radialseiten aufweist. Dies ermöglicht es, mittels des zumindest einen Führungsbolzens die beiden inneren Radialwandungen und damit die Radialseiten in Umfangsrichtung aufeinander zu zubewegen. Insbesondere können jeweils einer von zwei Führungsbolzen mit je einer der zwei inneren Radialwandungen verbunden sein. Dies ermöglicht es, dass beide inneren Radialwandungen in Umfangsrichtung aktiv mittels der Führungsbolzen aufeinander zubewegt werden und erhöht damit die Zuverlässigkeit und Schnelligkeit des Verspannens.

Ferner kann hierbei vorgesehen sein, dass die zumindest eine erste Führung eine Haupterstreckung in entgegengesetzter axialer Richtung aufweist, wobei die zumindest eine erste Führung entlang ihrer Haupterstreckung in Umfangsrichtung geneigt ist, so dass die Relativbewegung der Positioniereinheit in axialer Richtung zu der zumindest einen Anschlagfläche der Betätigungseinheit den zumindest einen in der zumindest einen ersten Führung geführten Führungsbolzen bewegt und dadurch die mit dem zumindest einen Führungsbolzen verbundene erste innere Radialwandung in Umfangsrichtung zu der zweiten inneren Radialwandung bewegt. Die entgegengesetzte axiale Richtung ist dabei der axiale Richtung, wie sie hierin definiert wird, entgegengesetzt. Dies ermöglicht es auf einfache Art und Weise, dass die Relativbewegung der Positioniereinheit gegenüber der Betätigungseinheit in Axialrichtung in eine Relativbewegung der inneren Radialwandungen in Umfangsrichtung übersetzt wird. Wenn die Kulissenführung zwei erste Führungen aufweist, kann insbesondere vorgesehen sein, dass die ersten Führungen entlang ihrer Haupterstreckung in Umfangsrichtung aufeinander zu geneigt sind. Dadurch wird bezweckt, dass die inneren Radialwandungen in Umfangsrichtung aufeinander zu bewegt werden.

Ferner kann dabei vorgesehen sein, dass die Maskiereinheit zumindest eine äußere Radialwandung aufweist, die in Umfangsrichtung von einer der zwei inneren Radialwandungen um eine radial ausgerichtete Reihe mit Hairpin-Anordnungen beabstandet ist, so dass sie in einer zu der Radialspalte zwischen den beiden inneren Radialwandungen benachbarten Radialspalte positioniert werden kann, wobei in der zumindest einen äußeren Radialwandung ein Kühlkanal zum Kühlen der Hairpin-Anordnungen in der radial ausgerichteten Reihe zwischen einer der zwei inneren Radialwandungen und der zumindest einen äußeren Radialwandung ausgebildet ist. Der Kühlkanal kann insbesondere dazu eingerichtet sein, mit Kältemittel oder Kühlmittel durchströmt zu werden. Der Kühlkanal kann hierzu mit einer Kühlvorrichtung verbunden sein. Die Kühlvorrichtung kann beispielsweise als eine Kompressionskältemaschine ausgebildet sein. Dementsprechend wird eine Kühlung der geschweißten und/oder noch zu schweißenden Hairpin-Anordnungen ermöglicht.

Ferner kann vorgesehen sein, dass die Positioniereinheit mittels zumindest zweier linear innerhalb der Betätigungseinheit verfahrbarer Zylinder gegenüber der Betätigungseinheit in der axialen Richtung verfahrbar ausgebildet ist. Insbesondere kann die Positioniereinheit mittels vier linear innerhalb der Betätigungseinheit verfahrbarer Zylinder gegenüber der Betätigungseinheit in der axialen Richtung verfahrbar ausgebildet sein. Dies ermöglicht eine einfache translatorische Relativbewegung zwischen Positioniereinheit und Betätigungseinheit. Ferner kann zumindest einer der Zylinder eine Federung zur Bereitstellung eines Rückstellhubs aufweisen. Dadurch wird die Positioniereinheit nach dem Loslassen einer axialen Druckkraft auf die Positioniereinheit zurückgestellt und ist zum erneuten Verspannen und Maskieren der Hairpin-Anordnungen der nachfolgenden radial ausgerichteten Reihe wieder einsatzbereit.

Auch kann vorgesehen sein, dass die Positioniereinheit eine Schweißöffnung für ein Schweißgerät zur Durchführung eines Schweißvorgangs an den in den Öffnungen aufgenommenen Hairpin-Anordnungen aufweist. Dadurch kann eine geometrisch günstige Schweißführung von oberhalb der Positioniereinheit und in axialer Richtung ermöglicht werden.

Auch wird die Aufgabe gelöst durch ein Verfahren zum Verbinden eines oberen Abschnitts von Hairpin-Anordnungen, insbesondere Hairpin-Paaren, eines Stators mittels eines Schweißvorgangs, wobei das Verfahren die Schritte aufweist:
(a) zeitgleiches Maskieren und Positionieren der Hairpin-Anordnungen unter Verwendung der in dieser Anmeldung beschriebenen Vorrichtung, wobei in axialer Richtung eine Absenkung der Vorrichtung zu dem Stator und anschließend eine Relativbewegung zwischen der Positioniereinheit und der Betätigungseinheit erfolgt, so dass zumindest die oberen Abschnitte der Hairpin-Anordnungen in den Öffnungen der Maskiereinheit der Vorrichtung aufgenommen sind,
(b) Durchführen des Schweißvorgangs, und
(c) Entfernen der Vorrichtung in entgegengesetzter axialer Richtung.

Es kann vorgesehen sein, dass in axialer Richtung eine Absenkung der Vorrichtung zu dem Stator erfolgt, so dass die Anschlagflächen der Betätigungseinheit am Stator oder einem Anschlag anliegen, und anschließend die Positioniereinheit in axialer Richtung verfahren wird, so dass zumindest die oberen Abschnitte der Hairpin-Anordnungen in den Öffnungen der Maskiereinheit der Vorrichtung aufgenommen sind.

Ferner wird die Aufgabe gelöst durch ein System mit
(a) einem Rotor umfassend Hairpin-Anordnungen, und
(b) der Vorrichtung,
wobei obere Abschnitte der Hairpin-Anordnungen in den Öffnungen der Maskiereinheit der Vorrichtung aufgenommen sind, so dass die jeweils in einer der Öffnungen aufgenommenen Hairpin-Anordnungen miteinander verschweißt werden können.

Die Erfindung wird im Folgenden anhand der Figuren näher beschrieben, wobei gleiche oder funktional gleiche Elemente ggf. lediglich einmal mit Bezugszeichen versehen sind.

Es zeigen:
- Figur 1: einen Stator mit eingefügten Hairpins in einer perspektivischen Darstellung;
- Figur 2: einen vergrößert dargestellten Teilausschnitt aus Figur 1;
- Figur 3: eine Vorrichtung zum zeitgleichen Maskieren und Verspannen von mehreren zu verschweißenden Hairpin-Anordnungen eines Stators in einer Schrägansicht;
- Figur 4: die Vorrichtung aus Figur 3 in einer teilweise freigelegten Schrägansicht;
- Figur 5: die Vorrichtung aus den Figuren 3 und 4 in einer Draufsicht;
- Figur 6: die Vorrichtung aus den Figuren 3 bis 5 in einer Längsschnittansicht; und
- Figur 7a-f: die Vorrichtung aus den Figuren 5 bis 6 in mehreren Draufsichten und Längsschnittansichten gemäß einem Verfahrensablauf.

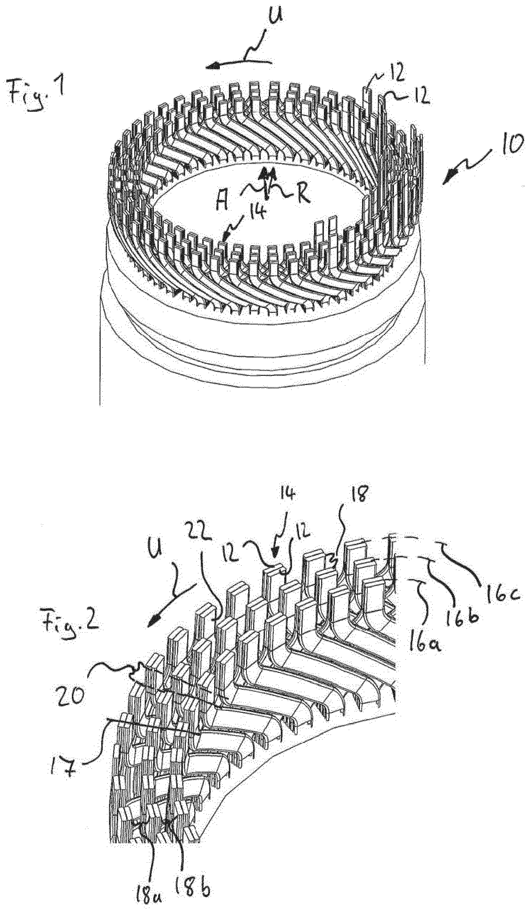

Figur 1 zeigt einen Stator 10, der eine Vielzahl an Hairpins 12 aufweist, von denen jeweils zwei zu einer Hairpin-Anordnung 14 zusammengefasst sind. Die Hairpin-Anordnungen 14 sind also jeweils durch Paare an Hairpins 12 bzw. Hairpin-Paare gebildet. Eine Hairpin-Anordnung 14 kann jedoch auch eine Anordnung mit mehr als 2 Hairpins 12 sein.

Die Hairpins 12 können dabei einen runden oder einen im Wesentlichen rechteckigen Querschnitt aufweisen.

Die beiden Hairpins 12 jeweils einer der Hairpin-Anordnungen 14 sollen auf ihren oberen Abschnitten 22 miteinander verschweißt werden, um unlösbar in elektrisch leitendem Kontakt zu stehen. Hierzu sollen die Hairpins 12 positioniert bzw. verspannt und maskiert werden.

Die einzelnen Hairpin-Anordnungen 14 sind in einer Umfangsrichtung U, vorliegend gleichmäßig, verteilt angeordnet. Dabei sind die einzelnen Hairpin-Anordnungen 14 auf jeweiligen konzentrisch zueinander angeordneten Kreisbahnen 16 angeordnet. Denkbar ist auch eine Anordnung lediglich auf Abschnitten einer Kreisbahn 16 (beispielsweise auf einem über 90° erstreckten Abschnitt). Vorliegend umfasst die Gesamtheit der zu verschweißenden Hairpin-Anordnungen 14, die auf einer ersten Kreisbahn 16a, zweiten Kreisbahn 16b und einer dritten konzentrisch zueinander ausgerichteten Kreisbahn 16c angeordnet sind. Die Kreisbahnen 16 sind jeweils über die Hairpin-Anordnung 14 der Kreisbahnen 16 und über Ringspalte 18a und 18b in radialer Richtung R zueinander beabstandet. Die auf den Kreisbahnen 16 angeordneten Hairpin-Anordnungen 14 sind jeweils über die Radialspalte 20 in Umfangsrichtung U zueinander beabstandet. Die Hairpin-Anordnungen 14 sind außerdem in mehreren in radialer Richtung R erstreckten Reihen 17 angeordnet. Die einzelnen Reihen 17 sind durch die Radialspalte 20 zueinander beabstandet.

Da die Hairpin-Anordnungen 14 auf der äußeren Kreisbahn 16c die gleichen Abmessungen wie die Hairpin-Anordnungen 14 auf der inneren Kreisbahn 16a aufweisen, jedoch die innere Kreisbahn 16a einen kleineren Durchmesser als die äußeren beiden Kreisbahnen 16b und 16c aufweist, verjüngen sich die Radialspalten 20 in radial einwärtsgerichteter Richtung. Die radiale Richtung R ist dabei mit dem Bezugszeichen R gekennzeichnet. Die zu verschweißenden abisolierten oberen Abschnitte 22 der Hairpins 12 erstrecken sich dabei jeweils in einer axialen Richtung A. Die axiale Richtung A steht orthogonal auf der radialen Richtung R. Die Umfangsrichtung U und die radiale Richtung R spannen gemeinsam eine orthogonal zur axialen Richtung A verlaufende Ebene auf. In dieser Ebene weisen die Hairpins bzw. deren Enden einen rechteckigen Querschnitt auf. Die Schmalseiten erstrecken sich dabei in radialer Richtung R. Die Längsseiten erstrecken sich dabei jeweils im Wesentlichen in Umfangsrichtung U.

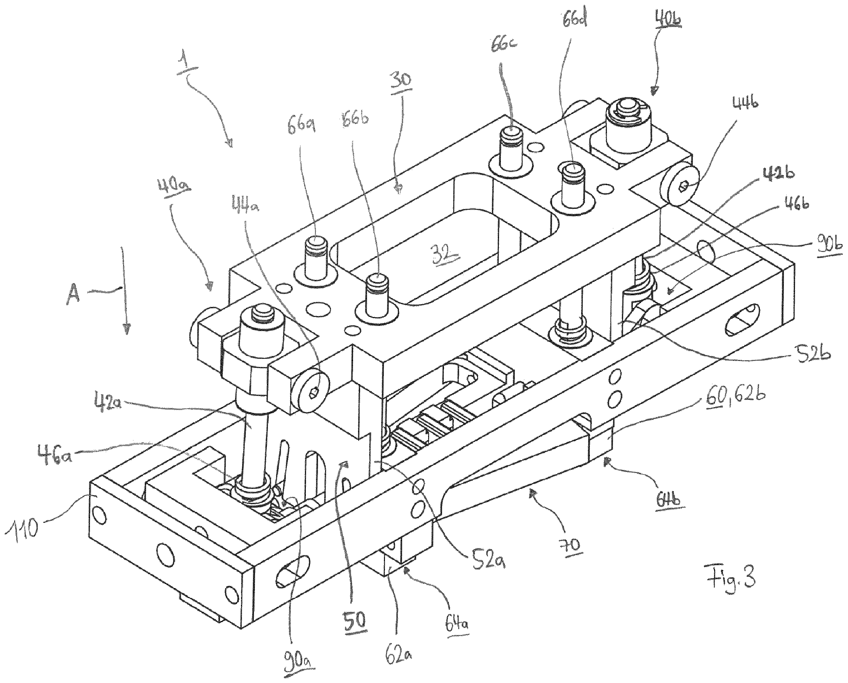

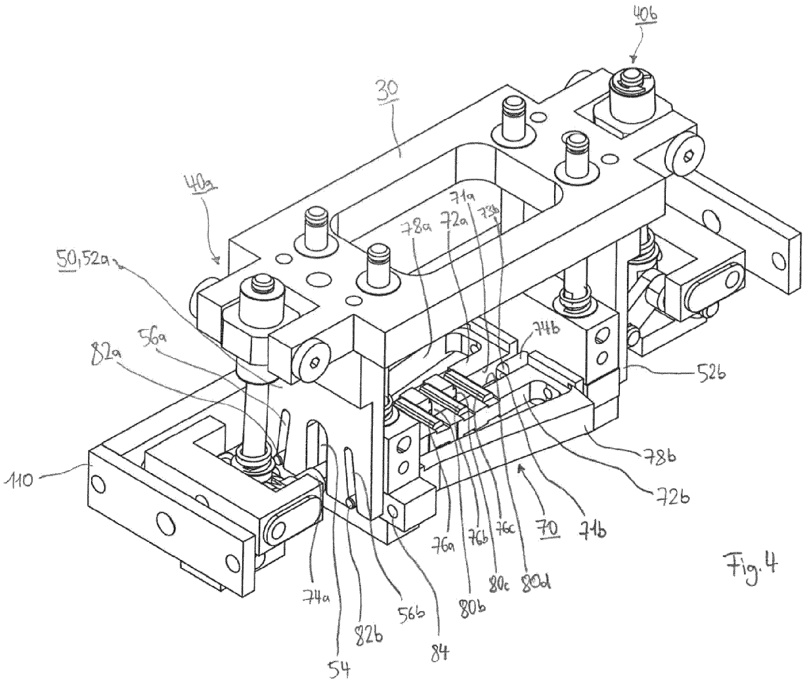

Figur 3 zeigt eine Vorrichtung 1 zum zeitgleichen Maskieren und Verspannen von vier in einer radial ausgerichteten Reihe 17 angeordneten und zu verschweißenden Hairpin-Paaren 14 eines Stators 10. Dazu weist die Vorrichtung 1 eine Maskiereinheit 70 mit vier Öffnungen 80a, 80b, 80c, 80d auf (siehe Figur 4, wobei die Öffnung 80a in dieser Ansicht verdeckt ist), wobei jede der Öffnungen 80a, 80b, 80c, 80d zur Aufnahme eines der vier Hairpin-Paare 14 eingerichtet ist. Die Anzahl und Größe der Öffnungen 80 in der Maskiereinheit 70 kann je nach zu bearbeitendem Stator verändert werden, um mehr Hairpin-Paare 14 in der Maskiereinheit 70 aufzunehmen oder Hairpin-Anordnungen 14 mit mehr als zwei Hairpins 12 darin aufzunehmen.

Die Vorrichtung 1 weist eine Positioniereinheit 30, eine relativ gegenüber der Positioniereinheit 30 bewegliche Betätigungseinheit 60, eine erste Kopplungseinheit 40a, 40b, eine zweite Kopplungseinheit 50, eine Maskiereinheit 70 und einen Rahmen 110 auf.

Die Positioniereinheit 30 weist eine Schweißöffnung 32 für ein Schweißgerät zur Durchführung eines Schweißvorgangs an den in den Öffnungen 80a, 80b, 80c, 80d aufgenommenen Hairpin-Anordnungen 14 auf. Typischerweise wird zur Verbindung der Hairpins Laserschweißen eingesetzt. Der Laserstrahl kann über die Schweißöffnung 32 auf die Hairpins einwirken.

Die Betätigungseinheit 60 weist vier Zylinder 66a, 66b, 66c, 66d auf, die in Ausnehmungen der Positioniereinheit 30 angeordnet und in Führungen der Betätigungseinheit 60 geführt sind, so dass die Betätigungseinheit 60 gegenüber der Positioniereinheit 30 verfahrbar ist. Wenn in axialer Richtung A eine Druckkraft auf die Positioniereinheit 30 ausgeübt wird (und die Betätigungseinheit 60 stationär gehalten wird, beispielsweise, weil sie auf dem Stator aufliegt), wird die Positioniereinheit 30 dadurch entlang der Zylinder 66a, 66b, 66c, 66d in Richtung auf die Betätigungseinheit 60 geführt. Für diesen Vorgang wird die Betätigungseinheit 60 abgestützt. Hierzu weist die Betätigungseinheit 60 zwei Anschlagflächen 64a, 64b auf, die an dem Stator 10 oder einem davon separat bereitgestellten Anschlag angelegt werden. Die Anschlagflächen 64a, 64b sind vorliegend an jeweils zwei sich von der Positioniereinheit 30 in axialer Richtung A zu der Maskiereinheit 70 erstreckender und einander gegenüberliegender Betätigungswandungen 62a, 62b der Betätigungseinheit 60 ausgebildet.

Durch relatives Bewegen der Positioniereinheit 30 gegenüber der am Stator 10 oder Anschlag angelegten Betätigungseinheit 60 werden in den Öffnungen 80a, 80b, 80c, 80d aufgenommene Hairpin-Anordnungen 14 maskiert und verspannt. Dazu ist die Maskiereinheit 70 zwischen den Betätigungswandungen 62a, 62b angeordnet.

Die Funktionsweise wird weiter mit Bezug auf die Figuren 3 und 4 im Folgenden näher erläutert. Figur 4 zeigt dabei eine teilweise freigelegte Schrägansicht der Vorrichtung 1. Dazu wurde ein Seitenteil des Rahmens 110 von der Vorrichtung 1 entfernt. Der Rahmen 110 ist an der Betätigungseinheit 60 angeordnet. Damit ermöglicht Figur 4 eine weitestgehend freie Sicht auf die erste Kopplungseinheit 40a, 40b, die zweite Kopplungseinheit 50 und die Maskiereinheit 70.

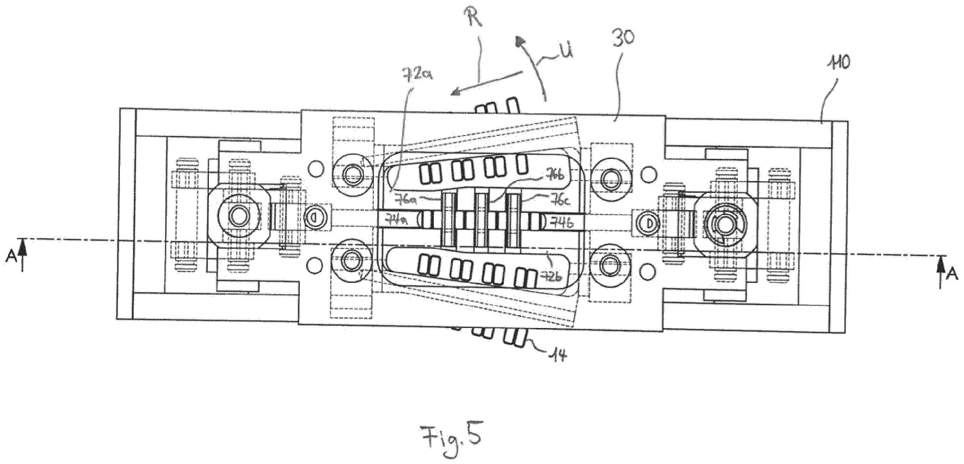

Die Maskiereinheit 70 ist mit zwei inneren Radialwandungen 72a, 72b ausgebildet. Die inneren Radialwandungen 72a, 72b weisen jeweils eine Radialseite 71a, 71b auf, die in radialer Richtung verlaufen, zueinander zeigen und die Öffnungen 80a, 80b, 80c, 80d in Umfangsrichtung U begrenzen (siehe Figur 5). Die inneren Radialwandungen 72a, 72b werden am Stator 10 in den Radialspalten 20 positioniert. Jede der inneren Radialwandungen 72a, 72b ist mit einem zweiten Kopplungsglied 52a der zweiten Kopplungseinheit 50 gekoppelt. Das zweite Kopplungsglied 52a ist dabei als eine Kulissenführung ausgebildet. Die Kulissenführung weist zwei erste Führungen 56a, 56b auf, die vorliegend als zweite Ausnehmungen ausgebildet sind. In den ersten Führungen 56a, 56b sind mit den inneren Radialwandungen 72a, 72b verbundene Führungsbolzen 82a, 82b angeordnet, mittels derer die Radialwandungen 72a, 72b in Umfangsrichtung U aufeinander zu bewegt werden können, um dadurch die Öffnungen 80a, 80b, 80c, 80d in Umfangsrichtung U zu verkleinern und dadurch wiederum die Hairpin-Anordnungen 14 in Umfangsrichtung U zu verspannen. Dazu weisen die beiden ersten Führungen 56a, 56b eine Haupterstreckung in entgegengesetzter axialer Richtung A auf, wobei die beiden ersten Führungen 56a, 56b entlang ihrer Haupterstreckung in Umfangsrichtung U zueinander geneigt sind. So bewirkt die Relativbewegung der Positioniereinheit 30 zu der Betätigungseinheit 60 eine Bewegung der inneren Radialwandungen 72a, 72b in Umfangsrichtung U aufeinander zu.

Ferner ist die Maskiereinheit 70 mit zwei äußeren Radialwandungen 78a, 78b ausgebildet, in denen Kühlkanäle 84 ausgebildet sind. Vorliegend ist nur der Kühlkanal 84 als Eingang in die äußere Radialwandung 78b zu sehen. Die äußeren Radialwandungen 78a, 78b sind in Umfangsrichtung U jeweils von einer der zwei inneren Radialwandungen 72a, 72b um eine radial ausgerichtete Reihe 17 mit Hairpin-Anordnungen 14 beabstandet (siehe Figur 5), so dass sie in einer zu der Radialspalte 20 zwischen den beiden inneren Radialwandungen 72a, 72b benachbarten Radialspalte 20 positioniert werden können. Der Kühlkanal 84 ist damit zum Kühlen der Hairpin-Anordnungen 14 in der radial ausgerichteten Reihe 17 zwischen einer der zwei inneren Radialwandungen 72a, 72b und der äußeren Radialwandung 78a, 78b, in der sich der Kühlkanal 84 befindet, ausgebildet. Die inneren Radialwandungen 72a, 72b sind dabei an den äußeren Radialwandungen 78a, 78b verschiebbar, insbesondere gleitend verschiebbar, angeordnet, um die Bewegbarkeit der inneren Radialwandungen 72a, 72b in Umfangsrichtung U nicht zu beeinträchtigen.

Die erste Kopplungseinheit 40 weist zwei erste Kopplungseinheitsteile 40a, 40b auf, die gegenüberliegend voneinander angeordnet sind, wobei zwischen diesen die Positioniereinheit 30 und die Maskiereinheit 70 angeordnet ist. Die erste Kopplungseinheit 40 weist jeweils zwei mittels Drehgelenken 44a, 44b an der Positioniereinheit 30 schwenkbar angeordnete erste Kopplungsglieder 42a, 42b auf. Die ersten Kopplungsglieder 42a, 42b sind vorliegend als Kopplungsstangen ausgebildet. Jedes der Kopplungsglieder 42a, 42b ist über Federungen 46a, 46b mit einem Kniehebelspanner 90a, 90b verbunden. Die Kniehebelspanner 90a, 90b sind ortsfest an dem Rahmen 110 befestigt. Ferner sind die Kniehebelspanner 90a, 90b jeweils mit einem Positionierbolzen 74a, 74b verbunden. Die Positionierbolzen 74a, 74b sind innerhalb von zweiten Führungen 54, die als Ausnehmungen in der zweiten Kopplungseinheit 50 ausgebildet sind, geführt. Wenn die Positioniereinheit 30 in axialer Richtung A zu der Betätigungseinheit 60 bewegt wird, wird eine Verspannung der Hairpin-Anordnungen 14 in radialer Richtung R mittels der ersten Kopplungseinheit 40 dadurch erzielt, dass die erste Kopplungseinheit 40 unter Ausführung einer Schwenkbewegung in Richtung zu der Maskiereinheit 70 in axialer Richtung A auf die Kniehebelspanner 90a, 90b wirken, so dass die Positionierbolzen 74a, 74b in radialer Richtung R aufeinander zu bewegt werden. Dadurch werden Umfangseiten 73a, 73b, die an den Positionierbolzen 74a, 74b ausgebildet sind und die Öffnungen 80a, 80d in radialer Richtung R begrenzen, aufeinander zu bewegt. Ferner sind Abstandhalter 76a, 76b, 76c zwischen den beiden inneren Radialwandungen 72a, 72b mit einem Spiel (also in radialer Richtung beweglich) angeordnet, um den freien Abstand zwischen den Umfangseiten 73a, 73b in die Öffnungen 80a, 80b, 80c, 80d zu unterteilen. Durch das Verspannen der Positionierbolzen 74a, 74b in radialer Richtung R werden die Hairpin-Anordnungen 14 in radialer Richtung R somit verspannt.

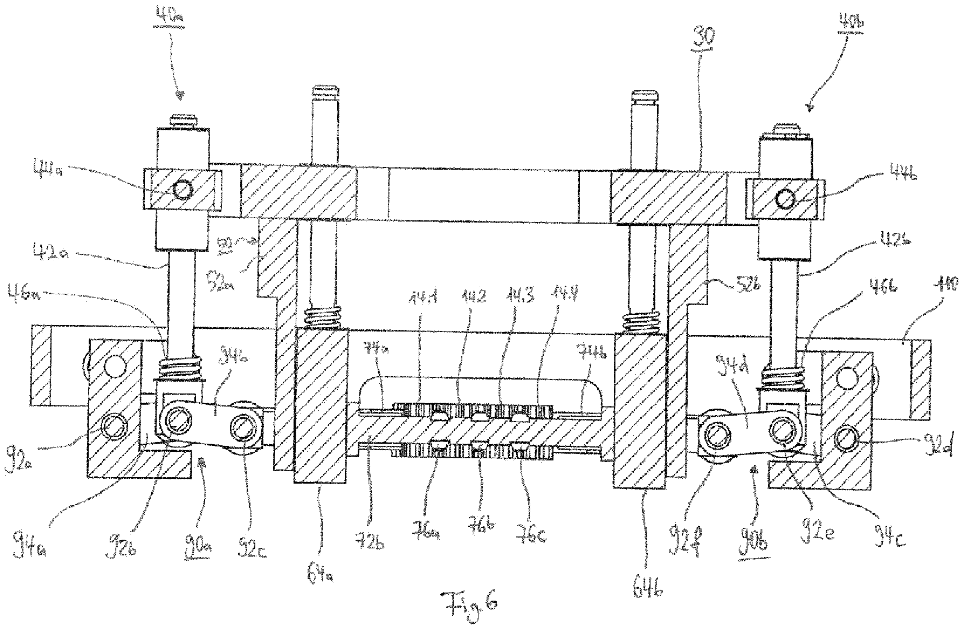

Die Verspannung der Hairpin-Anordnungen 14 ist in der Draufsicht der Figur 5 auf die Vorrichtung 1 und durch die Schweißöffnung 32 besonders gut zu sehen. Ferner ist dies in der Längsschnittansicht entlang der Linie A-A der Figur 5 in Figur 6 gut zu erkennen. Hier werden vier Hairpin-Anordnungen 14.1, 14.2, 14.3, 14.4 mittels der in Umfangsrichtung U zueinander bewegten inneren Radialwandungen 72a, 72b und mittels der in radialer Richtung R zueinander bewegten Positionierbolzen 74a, 74b und zwischen den Abstandhaltern 76a, 76b, 76c verspannt.

Figur 6 zeigt ferner den Aufbau der Kniehebelspanner 90a, 90b mit jeweils drei Drehgelenken 92a, 92b, 92c, 92d, 92e, 92f. Die drei Drehgelenke 92a, 92b, 92c, 92d, 92e, 92f je eines der Kniehebelspanner 90a, 90b sind mittels je zweier Verbindungselemente 94a, 94b, 94c, 94d miteinander gekoppelt. Dabei ist das jeweils erste Drehgelenk 92a, 92d jedes Kniehebelspanners 90a, 90b mit dem Rahmen 110 verbunden. Das jeweils dritte Drehgelenk 92c, 92f ist jeweils mit einem der Positionierbolzen 74a, 74b verbunden. Das jeweils zweite Drehgelenk 92b, 92e ist jeweils mittels beider Verbindungselemente 94a, 94b, 94c, 94d gelenkig mit den anderen beiden Drehgelenken 92a, 92c, 92d, 92f verbunden. Wenn die ersten Kopplungsglieder 42a, 42b in axialer Richtung A zu den Kniehebelspannern 90a, 90b geführt werden, werden die zweiten Drehgelenke 92b, 92e in axialer Richtung nach unten bewegt und führen aufgrund der Befestigung der ersten Drehgelenke 92a, 92d an dem Rahmen 110 eine translatorische Bewegung der dritten Drehgelenke 92c, 92f mit den mit diesen verbundenen Positionierbolzen 74a, 74b aus, um so das Verspannen der Hairpin-Anordnungen 14 in radialer Richtung R zu bewirken.

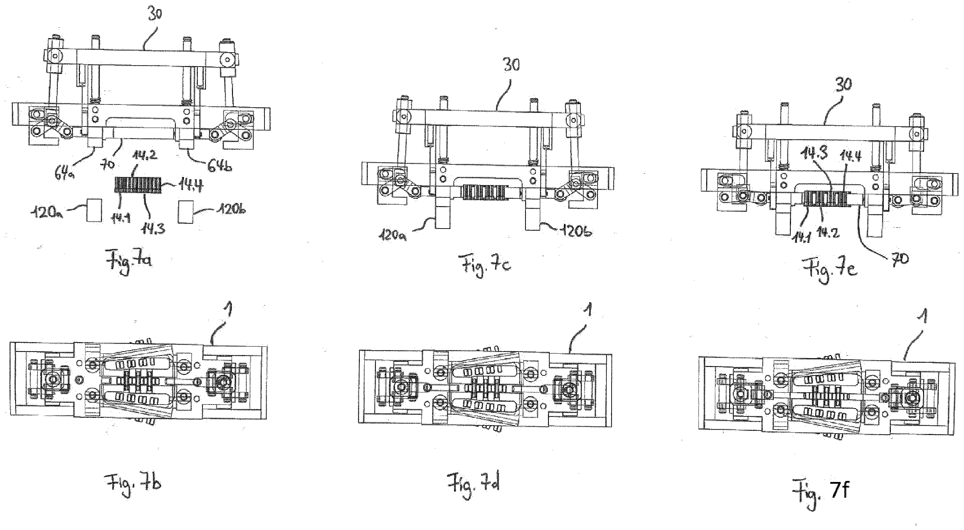

Figuren 7a bis 7f zeigen die Vorrichtung 1 in drei hintereinander folgenden Abläufen bzw. Schritten des Verfahrens jeweils in einer Längsschnittansicht und in einer Draufsicht.

In Figur 7a ist eine Längsschnittansicht und in Figur 7b eine Draufsicht auf die Vorrichtung 1 in einem ersten Schritt des Verfahrens gezeigt. Dabei wird die Vorrichtung 1 mit ihren Anschlagflächen 64a, 64b in axialer Richtung A zu Anschlägen 120a, 120b bewegt, die am Rotor 10 oder separat davon ausgebildet sein können. Zwischen den Anschlägen 120a, 120b sind die vier in den Figuren 5 und 6 gezeigten verspannten Hairpin-Paare 14.1, 14.2, 14.3, 14.4 des Rotors 10 angeordnet. Die Maskiereinheit 70 mit ihren Öffnungen 80a, 80b, 80c, 80d wird dabei auf diese zu bewegt.

In den Figuren 7c und 7d ist gezeigt, wie die Anschlagflächen 64a, 64b infolgedessen an den Anschlägen 120a, 120b an- bzw. aufgelegt sind und die Hairpin-Paare 14.1, 14.2, 14.3, 14.4 in den Öffnungen 80a, 80b, 80c, 80d der Maskiereinheit 70 aufgenommen sind. Dabei wurden die Kniehebelspanner 90a, 90b noch nicht gespannt, so dass die Hairpin-Paare 14.1, 14.2, 14.3, 14.4 noch mit verspannt worden sind. Hierzu muss auf die Positioniereinheit 30 eine Druckkraft in axialer Richtung A aufgebracht werden.

Die aus dem Aufbringen der Druckkraft resultierende Konfiguration ist in den Figuren 7e und 7f gezeigt. Die Figuren 7e und 7f entsprechen den Figuren 5 und 6, so dass diese die verspannte und maskierte Konfiguration der Hairpin-Paare 14.1, 14.2, 14.3, 14.4 mittels der Vorrichtung 1 zeigen.

## Patentansprüche

1. Vorrichtung (1) zum zeitgleichen Maskieren und Verspannen von mehreren zu verschweißenden Hairpin-Anordnungen (14), insbesondere Hairpin-Paaren, eines Stators (10), wobei
(i) die mehreren Hairpin-Anordnungen (14) in einer Umfangsrichtung (U) verteilt auf mehreren konzentrisch zueinander angeordneten Kreisbahnen (16a, 16b, 16c) oder auf Abschnitten von konzentrischen Kreisbahnen (16a, 16b, 16c) angeordnet sind, so dass
(ii) die Hairpin-Anordnungen (14) in radial ausgerichteten Reihen (17) angeordnet sind, die in Umfangsrichtung (U) über in radialer Richtung (R) verlaufende Radialspalte (20) zueinander beabstandet sind, und wobei
(iii) die einzelnen Hairpin-Anordnungen (14) in einer radial ausgerichteten Reihe (17) in radialer Richtung (R) zueinander über zwischen den konzentrisch zueinander angeordneten Kreisbahnen (16a, 16b, 16c) verlaufende Ringspalte (18a, 18b) beabstandet sind,
wobei die Vorrichtung (1) aufweist:
(a) eine Positioniereinheit (30) zur Positionierung der Vorrichtung (1) bezüglich des zu bearbeitenden Stators (10);
(b) eine Maskiereinheit (70), die mehrere Öffnungen (80a, 80b, 80c, 80d) zum Aufnehmen jeweils einer der mehreren in der radial ausgerichteten Reihe (17) angeordneten Hairpin-Anordnungen (14) aufweist, wobei die mehreren Öffnungen (80a, 80b, 80c, 80d) von einander in radialer Richtung (R) gegenüberliegenden und in Umfangsrichtung (U) verlaufenden Umfangseiten (73a, 73b) und einander in Umfangsrichtung (U) gegenüberliegenden und von in radialer Richtung (R) verlaufenden Radialseiten (71a, 71b) der Maskiereinheit (70) begrenzt werden;
(c) eine Betätigungseinheit (60), die relativ zu der Positioniereinheit (30) beweglich ausgebildet ist,
(d) eine erste Kopplungseinheit (40a, 40b), mittels der die Betätigungseinheit (60) und die Positioniereinheit (30) derart mit der Maskiereinheit (70) wirkverbunden gekoppelt sind, dass eine Relativbewegung zwischen der Positioniereinheit (30) und der Betätigungseinheit (60) eine Bewegung der Umfangseiten (73a, 73b) in radialer Richtung (R) aufeinander zu bewirkt, um die in den Öffnungen (80a, 80b, 80c, 80d) aufgenommenen Hairpin-Anordnungen (14) in radialer Richtung (R) zu maskieren und zu verspannen, wobei die erste Kopplungseinheit (40) zumindest ein erstes Kopplungsglied (42a, 42b) aufweist, und
(e) eine zweite Kopplungseinheit (50), mittels der die Betätigungseinheit (60) und die Positioniereinheit (30) derart mit der Maskiereinheit (70) wirkverbunden gekoppelt sind, dass die Relativbewegung zwischen der Positioniereinheit (30) und der Betätigungseinheit (60) eine Bewegung der Radialseiten (71a, 71b) in Umfangsrichtung (U) aufeinander zu bewirkt, um in den Öffnungen (80a, 80b, 80c, 80d) aufgenommene Hairpin-Anordnungen (14) in Umfangsrichtung (U) zu maskieren und zu verspannen, wobei die zweite Kopplungseinheit (50) zumindest ein zweites Kopplungsglied (52a, 52b) aufweist.

2. Vorrichtung (1) nach Anspruch 1, wobei
(a) die erste Kopplungseinheit (40) zumindest ein erstes Kopplungsglied (42a, 42b) aufweist, das insbesondere schwenkbar an der Positioniereinheit (30) angelenkt ist,
(b) die Betätigungseinheit (60) mit zumindest einer Anschlagfläche (64a, 64b) ausgebildet ist, wobei die Positioniereinheit (30) gegenüber der Betätigungseinheit (60) in der axialen Richtung (A) bewegbar ausgebildet ist, und
(c) die Maskiereinheit (70) an der Betätigungseinheit (60) in axialer Richtung ortsfest angeordnet ist, und wobei die Maskiereinheit (70) mittels des zumindest einen ersten Kopplungsglieds (42a, 42b) derart mit der Positioniereinheit (30) wirkverbunden ist, dass die Relativbewegung der Positioniereinheit (30) in axialer Richtung (A) zu der zumindest einen Anschlagfläche (64a, 64b) der Betätigungseinheit (60) die Bewegung der Umfangseiten (73a, 73b) in radialer Richtung (R) aufeinander zu bewirkt, um die in den Öffnungen (80a, 80b, 80c, 80d) aufgenommenen Hairpin-Anordnungen (14) in radialer Richtung (R) zu maskieren und zu verspannen.

3. Vorrichtung (1) nach Anspruch 2, wobei die erste Kopplungseinheit (40) zwei erste Kopplungsglieder (42a, 42b) aufweist, die insbesondere schwenkbar an der Positioniereinheit (30) angelenkt sind, wobei die Positioniereinheit (30) in radialer Richtung (R) zwischen den zwei ersten Kopplungsgliedern (42a, 42b) angeordnet ist.

4. Vorrichtung (1) nach Anspruch 2 oder 3, wobei das zumindest eine erste Kopplungsglied (42a, 42b) mittels zumindest eines Kniehebelspanners (90a, 90b) mit der Maskiereinheit (70) wirkverbunden ist.

5. Vorrichtung (1) nach Anspruch 4, wobei die Maskiereinheit (40) zumindest einen Positionierbolzen (74a, 74b) aufweist, der eine der zwei Umfangseiten (73a, 73b) aufweist, wobei der zumindest eine Kniehebelspanner (90a, 90b) derart mit dem zumindest einen Positionierbolzen (74a, 74b) wirkverbunden ist, dass bei der Relativbewegung zwischen der Positioniereinheit (30) und der Betätigungseinheit (60) der zumindest eine Positionierbolzen (74a, 74b) in radialer Richtung (R) mittels des zumindest einen Kniehebelspanners (90a, 90b) eine Bewegung der Umfangseite (73a, 73b) des zumindest einen Positionierbolzens (74a, 74b) in radialer Richtung (R) auf die andere Umfangseite (73a, 74b) bewirkt, um die in den Öffnungen (80a, 80b, 80c, 80d) aufgenommenen Hairpin-Anordnungen (14) in radialer Richtung (R) zu maskieren und zu verspannen.

6. Vorrichtung (1) nach einem der Ansprüche 4 oder 5, wobei die Vorrichtung (1) einen Rahmen (110) aufweist, der fest mit der Betätigungseinheit (60) verbunden ist, wobei der zumindest eine Kniehebelspanner (90a, 90b) fest mit dem Rahmen (110) verbunden ist.

7. Vorrichtung (1) nach einem der Ansprüche 2 bis 6, wobei die Maskiereinheit (70) zumindest einen Abstandhalter (76a, 76b, 76c) aufweist, der zwischen den Umfangseiten (73a, 73b) angeordnet ist, und dazu eingerichtet ist, in den Ringspalten (18a, 18b) positioniert zu werden und die in den Öffnungen (80a, 80b, 80c, 80d) aufgenommenen Hairpin-Anordnungen (14) in radialer Richtung (R) zu verspannen.

8. Vorrichtung (1) nach Anspruch 7, wobei die Abstandhalter (76a, 76b, 76c) in radialer Richtung (R) mit einem Spiel an der Maskiereinheit (70) angeordnet sind.

9. Vorrichtung (1) nach einem der voranstehenden Ansprüche, wobei
(a) die zweite Kopplungseinheit (50) zumindest ein zweites Kopplungsglied (52a, 52b) aufweist,
(b) die Betätigungseinheit (60) mit zumindest einer Anschlagfläche (64a, 64b) ausgebildet ist, wobei die Positioniereinheit (30) gegenüber der Betätigungseinheit (60) in der axialen Richtung (A) bewegbar ausgebildet ist, und
(c) die Maskiereinheit (70) an der Betätigungseinheit (60) in axialer Richtung ortsfest angeordnet ist, und wobei die Maskiereinheit (70) mittels des zumindest einen zweiten Kopplungsglieds (52a, 52b) derart mit der Positioniereinheit (30) wirkverbunden ist, dass die Relativbewegung der Positioniereinheit (30) in axialer Richtung (A) zu der zumindest einen Anschlagfläche (64a, 64b) der Betätigungseinheit (60) die Bewegung der Radialseiten (71a, 71b) in Umfangrichtung (U) aufeinander zu bewirkt, um in den Öffnungen (80a, 80b, 80c, 80d) aufgenommene Hairpin-Anordnungen (14) in Umfangsrichtung (U) zu maskieren und zu verspannen.

10. Vorrichtung (1) nach Anspruch 9, wobei das zumindest eine zweite Kopplungsglied (52a, 52b) sich von der Positioniereinheit (30) in axialer Richtung (A) zu der Maskiereinheit (70) erstreckt.

11. Vorrichtung (1) nach Anspruch 9 oder 10, wobei das zumindest eine zweite Kopplungsglied (52a) als eine Kulissenführung mit zumindest einer ersten Führung (56a, 56b) ausgebildet ist, in der zumindest ein Führungsbolzen (82a, 82b) der Maskiereinheit (70) geführt ist.

12. Vorrichtung (1) nach Anspruch 11, wobei der zumindest eine Führungsbolzen (82a, 82b) mit einer ersten inneren Radialwandung (72a) von zwei einander in Umfangsrichtung (U) gegenüberliegenden inneren Radialwandungen (72a, 72b) der Maskiereinheit (70) verbunden ist, wobei die inneren Radialwandungen (72a, 72b) dazu eingerichtet sind, in den Radialspalten (20) positioniert zu werden, und wobei die erste innere Radialwandung (72a) der zwei inneren Radialwandungen (72a, 72b) eine erste Radialseite (71a) der zwei Radialseiten (71a, 71b) aufweist und eine zweite innere Radialwandung (72b) der zwei inneren Radialwandungen (72a, 72b) eine zweite Radialseite (71b) der zwei Radialseiten (71a, 71b) aufweist.

13. Vorrichtung (1) nach Anspruch 12, wobei die zumindest eine erste Führung (56a, 56b) eine Haupterstreckung in entgegengesetzter axialer Richtung (A) aufweist, wobei die zumindest eine erste Führung (56a, 56b) entlang ihrer Haupterstreckung in Umfangsrichtung (U) geneigt ist, so dass die Relativbewegung der Positioniereinheit (30) in axialer Richtung (A) zu der zumindest einen Anschlagfläche (64a, 64b) der Betätigungseinheit (60) den zumindest einen in der zumindest einen ersten Führung (56a, 56b) geführten Führungsbolzen (82a, 82b) bewegt und dadurch die mit dem zumindest einen Führungsbolzen (82a, 82b) verbundene erste innere Radialwandung (72a, 72b) in Umfangsrichtung (U) zu der zweiten inneren Radialwandung (72a, 72b) bewegt.

14. Vorrichtung (1) nach einem der Ansprüche 12 oder 13, wobei die Maskiereinheit (70) zumindest eine äußere Radialwandung (78a, 78b) aufweist, die in Umfangsrichtung (U) von einer der zwei inneren Radialwandungen (72a, 72b) um eine radial ausgerichtete Reihe (17) mit Hairpin-Anordnungen (14) beabstandet ist, so dass sie in einer zu der Radialspalte (20) zwischen den beiden inneren Radialwandungen (72a, 72b) benachbarten Radialspalte (20) positioniert werden kann, wobei in der zumindest einen äußeren Radialwandung (78a, 78b) ein Kühlkanal (84) zum Kühlen der Hairpin-Anordnungen (14) in der radial ausgerichteten Reihe (17) zwischen einer der zwei inneren Radialwandungen (72a, 72b) und der zumindest einen äußeren Radialwandung (78a, 78b) ausgebildet ist.

15. Vorrichtung (1) nach einem der voranstehenden Ansprüche, wobei die Positioniereinheit (30) mittels zumindest zweier linear innerhalb der Betätigungseinheit (60) verfahrbarer Zylinder (56a, 56b, 56c, 56d) gegenüber der Betätigungseinheit (60) in der axialen Richtung (A) verfahrbar ausgebildet ist.

16. Vorrichtung (1) nach einem der voranstehenden Ansprüche, wobei die Positioniereinheit (30) eine Schweißöffnung (32) für ein Schweißgerät zur Durchführung eines Schweißvorgangs an den in den Öffnungen (80a, 80b, 80c, 80d) aufgenommenen Hairpin-Anordnungen (14) aufweist.

17. Verfahren zum Verbinden eines oberen Abschnitts (22) von Hairpin-Anordnungen (14), insbesondere Hairpin-Paaren, eines Stators (10) mittels eines Schweißvorgangs, wobei das Verfahren die Schritte aufweist:
(a) zeitgleiches Maskieren und Positionieren der Hairpin-Anordnungen (14) unter Verwendung einer Vorrichtung (1) gemäß einem der voranstehenden Ansprüche, wobei in axialer Richtung (A) eine Absenkung der Vorrichtung (1) zu dem Stator (10) und anschließend eine Relativbewegung zwischen der Positioniereinheit (30) und der Betätigungseinheit (60) erfolgt, so dass zumindest die oberen Abschnitte (22) der Hairpin-Anordnungen (14) in den Öffnungen (80a, 80b, 80c, 80d) der Maskiereinheit (70) der Vorrichtung (1) aufgenommen sind,
(b) Durchführen des Schweißvorgangs, und
(c) Entfernen der Vorrichtung (1) in entgegengesetzter axialer Richtung (A).

18. System mit
(a) einem Rotor (10) umfassend Hairpin-Anordnungen (14), und
(b) einer Vorrichtung gemäß einem der Ansprüche 1 bis 16,
wobei obere Abschnitte (22) der Hairpin-Anordnungen (14) in den Öffnungen (80a, 80b, 80c, 80d) der Maskiereinheit (70) der Vorrichtung (1) aufgenommen sind, so dass die jeweils in einer der Öffnungen (80a, 80b, 80c, 80d) aufgenommenen Hairpin-Anordnungen (14) miteinander verschweißt werden können.

## Claims

1. Device (1) for simultaneously masking and bracing a plurality of hairpin arrangements (14) to be welded, in particular hairpin pairs, of a stator (10), wherein
(i) the plurality of hairpin arrangements (14) are distributed in a circumferential direction (U) on a plurality of concentrically arranged circular paths (16a, 16b, 16c) or on portions of concentric circular paths (16a, 16b, 16c) such that
(ii) the hairpin arrangements (14) are arranged in radially aligned rows (17) which are spaced apart from one another in the circumferential direction (U) via radial gaps (20) extending in the radial direction (R), and wherein
(iii) the individual hairpin arrangements (14) in a radially aligned row (17) are spaced apart from one another in the radial direction (R) via annular gaps (18a, 18b) extending between the concentrically arranged circular paths (16a, 16b, 16c),
wherein the device (1) comprises:
(a) a positioning unit (30) for positioning the device (1) with respect to the stator (10) to be machined,
(b) a masking unit (70) which comprises a plurality of openings (80a, 80b, 80c, 80d) for each receiving one of the plurality of hairpin arrangements (14) arranged in the radially aligned row (17), wherein the plurality of openings (80a, 80b, 80c, 80d) are delimited by circumferential sides (73a, 73b), which are opposite one another in the radial direction (R) and extend in the circumferential direction (U), and by radial sides (71a, 71b) of the masking unit (70), which are opposite one another in the circumferential direction (U) and extend in the radial direction (R),
(c) an actuating unit (60) which is designed to be movable relative to the positioning unit (30),
(d) a first coupling unit (40a, 40b), by means of which the actuating unit (60) and the positioning unit (30) are operatively coupled to the masking unit (70) such that a relative movement between the positioning unit (30) and the actuating unit (60) causes a movement of the circumferential sides (73a, 73b) toward one another in the radial direction (R) in order to mask and brace the hairpin arrangements (14) received in the openings (80a, 80b, 80c, 80d) in the radial direction (R), wherein the first coupling unit (40) comprises at least one first coupling element (42a, 42b), and
(e) a second coupling unit (50), by means of which the actuating unit (60) and the positioning unit (30) are operatively coupled to the masking unit (70) such that the relative movement between the positioning unit (30) and the actuating unit (60) causes a movement of the radial sides (71a, 71b) toward one another in the circumferential direction (U) in order to mask and brace hairpin arrangements (14) received in the openings (80a, 80b, 80c, 80d) in the circumferential direction (U), wherein the second coupling unit (50) comprises at least one second coupling element (52a, 52b).

2. Device (1) according to claim 1, wherein
(a) the first coupling unit (40) comprises at least one first coupling element (42a, 42b) which is in particular pivotally articulated to the positioning unit (30),
(b) the actuating unit (60) is designed to have at least one stop surface (64a, 64b), wherein the positioning unit (30) is designed to be movable relative to the actuating unit (60) in the axial direction (A), and
(c) the masking unit (70) is arranged on the actuating unit (60) in a stationary manner in the axial direction, and wherein the masking unit (70) is operatively connected to the positioning unit (30) by means of the at least one first coupling element (42a, 42b) such that the relative movement of the positioning unit (30) in the axial direction (A) toward the at least one stop surface (64a, 64b) of the actuating unit (60) causes the movement of the circumferential sides (73a, 73b) toward one another in the radial direction (R) in order to mask and brace the hairpin arrangements (14) received in the openings (80a, 80b, 80c, 80d) in the radial direction (R).

3. Device (1) according to claim 2, wherein the first coupling unit (40) comprises two first coupling elements (42a, 42b) which are in particular pivotally articulated on the positioning unit (30), wherein the positioning unit (30) is arranged between the two first coupling elements (42a, 42b) in the radial direction (R).

4. Device (1) according to either claim 2 or claim 3, wherein the at least one first coupling element (42a, 42b) is operatively connected to the masking unit (70) by means of at least one toggle clamp (90a, 90b).

5. Device (1) according to claim 4, wherein the masking unit (40) comprises at least one positioning pin (74a, 74b) which comprises one of the two circumferential sides (73a, 73b), wherein the at least one toggle clamp (90a, 90b) is operatively connected to the at least one positioning pin (74a, 74b) such that, during the relative movement between the positioning unit (30) and the actuating unit (60), the at least one positioning pin (74a, 73b) in the radial direction (R) causes a movement of the circumferential side (73a, 73b) of the at least one positioning pin (74a, 74b) in the radial direction (R) onto the other circumferential side (73a, 74b) by means of the at least one toggle clamp (90a, 90b) in order to mask and brace the hairpin arrangements (14) received in the openings (80a, 80b, 80c, 80d) in the radial direction (R).

6. Device (1) according to either claim 4 or claim 5, wherein the device (1) comprises a frame (110) which is securely connected to the actuating unit (60), wherein the at least one toggle clamp (90a, 90b) is securely connected to the frame (110).

7. Device (1) according to any of claims 2 to 6, wherein the masking unit (70) comprises at least one spacer (76a, 76b, 76c) which is arranged between the circumferential sides (73a, 73b) and is configured to be positioned in the annular gaps (18a, 18b) and to brace the hairpin arrangements (14) received in the openings (80a, 80b, 80c, 80d) in the radial direction (R).

8. Device (1) according to claim 7, wherein the spacers (76a, 76b, 76c) are arranged on the masking unit (70) with play in the radial direction (R).

9. Device (1) according to any of the preceding claims, wherein
(a) the second coupling unit (50) comprises at least one second coupling element (52a, 52b),
(b) the actuating unit (60) is designed to have at least one stop surface (64a, 64b), wherein the positioning unit (30) is designed to be movable relative to the actuating unit (60) in the axial direction (A), and
(c) the masking unit (70) is arranged on the actuating unit (60) in a stationary manner in the axial direction, and wherein the masking unit (70) is operatively connected to the positioning unit (30) by means of the at least one second coupling element (52a, 52b) such that the relative movement of the positioning unit (30) in the axial direction (A) toward the at least one stop surface (64a, 64b) of the actuating unit (60) causes the movement of the radial sides (71a, 71b) toward one another in the circumferential direction (U) in order to mask and brace hairpin arrangements (14) received in the openings (80a, 80b, 80c, 80d) in the circumferential direction (U).

10. Device (1) according to claim 9, wherein the at least one second coupling element (52a, 52b) extends from the positioning unit (30) toward the masking unit (70) in the axial direction (A).

11. Device (1) according to either claim 9 or claim 10, wherein the at least one second coupling element (52a) is designed as a slotted guide having at least one first guide (56a, 56b) in which at least one guide pin (82a, 82b) of the masking unit (70) is guided.

12. Device (1) according to claim 11, wherein the at least one guide pin (82a, 82b) is connected to a first inner radial wall (72a) of two inner radial walls (72a, 72b) of the masking unit (70), which are opposite one another in the circumferential direction (U), wherein the inner radial walls (72a, 72b) are configured to be positioned in the radial gaps (20), and wherein the first inner radial wall (72a) of the two inner radial walls (72a, 72b) comprises a first radial side (71a) of the two radial sides (71a, 71b) and a second inner radial wall (72b) of the two inner radial walls (72a, 71b) comprises a second radial side (71b) of the two radial sides (71a, 71b).

13. Device (1) according to claim 12, wherein the at least one first guide (56a, 56b) has a main extension in the opposite axial direction (A), wherein the at least one first guide (56a, 56b) is inclined along its main extension in the circumferential direction (U) such that the relative movement of the positioning unit (30) in the axial direction (A) toward the at least one stop surface (64a, 64b) of the actuating unit (60) moves the at least one guide pin (82a, 82b), which is guided in the at least one first guide (56a, 56b), and, as a result, moves the first inner radial wall (72a, 72b) which is connected to the at least one guide pin (82a, 82b) in the circumferential direction (U) toward the second inner radial wall (72a, 72b).

14. Device (1) according to either claim 12 or claim 13, wherein the masking unit (70) comprises at least one outer radial wall (78a, 78b) which is spaced apart from one of the two inner radial walls (72a, 72b) in the circumferential direction (U) by a radially aligned row (17) having hairpin arrangements (14) such that it can be positioned in a radial gap (20) adjacent to the radial gap (20) between the two inner radial walls (72a, 72b), wherein a cooling channel (84) is formed in the at least one outer radial wall (78a, 78b) for cooling the hairpin arrangements (14) in the radially aligned row (17) between one of the two inner radial walls (72a, 72b) and the at least one outer radial wall (78a, 78b).

15. Device (1) according to any of the preceding claims, wherein the positioning unit (30) is designed to be movable relative to the actuating unit (60) in the axial direction (A) by means of at least two cylinders (56a, 56b, 56c, 56d) which can be moved linearly within the actuating unit (60).

16. Device (1) according to any of the preceding claims, wherein the positioning unit (30) has a welding opening (32) for a welding apparatus for carrying out a welding process on the hairpin arrangements (14) received in the openings (80a, 80b, 80c, 80d).

17. Method for connecting an upper portion (22) of hairpin arrangements (14), in particular hairpin pairs, of a stator (10) by means of a welding process, wherein the method comprises the steps of:
(a) simultaneously masking and positioning the hairpin arrangements (14) using a device (1) according to any of the preceding claims, wherein the device (1) is lowered toward the stator (10) in the axial direction (A) and then a relative movement between the positioning unit (30) and the actuating unit (60) is carried out such that at least the upper portions (22) of the hairpin arrangements (14) are received in the openings (80a, 80b, 80c, 80d) of the masking unit (70) of the device (1),
(b) carrying out the welding process, and
(c) removing the device (1) in the opposite axial direction (A).

18. System having
(a) a rotor (10) comprising hairpin arrangements (14), and
(b) a device according to any of claims 1 to 16,
wherein upper portions (22) of the hairpin arrangements (14) are received in the openings (80a, 80b, 80c, 80d) of the masking unit (70) of the device (1) such that the hairpin arrangements (14), which are each received in one of the openings (80a, 80b, 80c, 80d), can be welded together.

## Revendications

1. Dispositif (1) pour le masquage et le serrage simultanés de plusieurs agencements en épingle à cheveux (14) à souder, en particulier de paires en épingle à cheveux, d'un stator (10), dans lequel
(i) les plusieurs agencements en épingle à cheveux (14) sont répartis dans une direction circonférentielle (U) sur plusieurs trajectoires circulaires (16a, 16b, 16c) disposées concentriquement les unes par rapport aux autres ou sur des sections de trajectoires circulaires (16a, 16b, 16c) concentriques, de sorte que
(ii) les agencements en épingle à cheveux (14) sont disposés en rangées (17) orientées radialement, qui sont espacées les unes des autres dans la direction circonférentielle (U) par l'intermédiaire de fentes radiales (20) s'étendant dans la direction radiale (R), et dans lequel
iii) les différents agencements en épingle à cheveux (14) sont espacés les uns des autres dans une rangée (17) orientée radialement, dans la direction radiale (R), par l'intermédiaire de fentes annulaires (18a, 18b) s'étendant entre les trajectoires circulaires (16a, 16b, 16c) disposées concentriquement les unes par rapport aux autres, dans lequel le dispositif (1) présente :
(a) une unité de positionnement (30) pour positionner le dispositif (1) par rapport au stator (10) à usiner ;
(b) une unité de masquage (70), qui présente plusieurs ouvertures (80a, 80b, 80c, 80d) pour recevoir respectivement l'un des plusieurs agencements en épingle à cheveux (14) disposés dans la rangée (17) orientée radialement, dans lequel les plusieurs ouvertures (80a, 80b, 80c, 80d) sont délimitées par des côtés périphériques (73a, 73b) opposés les uns aux autres dans la direction radiale (R) et s'étendant dans la direction circonférentielle (U) et par des côtés radiaux (71a, 71b) de l'unité de masquage (70) opposés les uns aux autres dans la direction circonférentielle (U) et s'étendant dans la direction radiale (R) ;
(c) une unité d'actionnement (60) qui est réalisée de manière mobile par rapport à l'unité de positionnement (30),
(d) une première unité de couplage (40a, 40b), au moyen de laquelle l'unité d'actionnement (60) et l'unité de positionnement (30) sont couplées en liaison fonctionnelle avec l'unité de masquage (70), de telle sorte qu'un mouvement relatif entre l'unité de positionnement (30) et l'unité d'actionnement (60) provoque un mouvement des côtés périphériques (73a, 73b) l'un vers l'autre dans la direction radiale (R), afin de masquer et de serrer dans la direction radiale (R) les agencements en épingle à cheveux (14) reçus dans les ouvertures (80a, 80b, 80c, 80d), dans lequel la première unité de couplage (40) présente au moins un premier élément de couplage (42a, 42b), et
(e) une deuxième unité de couplage (50), au moyen de laquelle l'unité d'actionnement (60) et l'unité de positionnement (30) sont couplées en liaison fonctionnelle avec l'unité de masquage (70), de telle sorte que le mouvement relatif entre l'unité de positionnement (30) et l'unité d'actionnement (60) provoque un mouvement des côtés radiaux (71a, 71b) l'un vers l'autre dans la direction circonférentielle (U), afin de masquer et de serrer des agencements en épingle à cheveux (14) reçus dans les ouvertures (80a, 80b, 80c, 80d) dans la direction circonférentielle (U), dans lequel la deuxième unité de couplage (50) présente au moins un deuxième élément de couplage (52a, 52b).

2. Dispositif (1) selon la revendication 1, dans lequel
(a) la première unité de couplage (40) présente au moins un premier élément de couplage (42a, 42b), qui est articulé en particulier de manière pivotante sur l'unité de positionnement (30),
(b) l'unité d'actionnement (60) est réalisée avec au moins une
surface de butée (64a, 64b), dans lequel l'unité de positionnement (30) est réalisée de manière à pouvoir se déplacer dans la direction axiale (A) par rapport à l'unité d'actionnement (60), et
(c) l'unité de masquage (70) est disposée de manière fixe sur l'unité d'actionnement (60) dans la direction axiale, et dans lequel l'unité de masquage (70) est en liaison fonctionnelle avec l'unité de positionnement (30) au moyen de l'au moins un premier élément de couplage (42a, 42b), de telle sorte que le mouvement relatif de l'unité de positionnement (30) dans la direction axiale (A) vers l'au moins une surface de butée (64a, 64b) de l'unité d'actionnement (60) provoque le mouvement des côtés périphériques (73a, 73b) l'un vers l'autre dans la direction radiale (R), afin de masquer et de serrer dans la direction radiale (R) les agencements en épingle à cheveux (14) reçus dans les ouvertures (80a, 80b, 80c, 80d).

3. Dispositif (1) selon la revendication 2, dans lequel la première unité de couplage (40) présente deux premiers éléments de couplage (42a, 42b), qui sont notamment articulés de manière pivotante sur l'unité de positionnement (30), dans lequel l'unité de positionnement (30) est disposée dans la direction radiale (R) entre les deux premiers éléments de couplage (42a, 42b).

4. Dispositif (1) selon la revendication 2 ou 3, dans lequel l'au moins un premier élément de couplage (42a, 42b) est en liaison fonctionnelle avec l'unité de masquage (70) au moyen d'au moins une sauterelle de bridage (90a, 90b).

5. Dispositif (1) selon la revendication 4, dans lequel l'unité de masquage (40) présente au moins un boulon de positionnement (74a, 74b), qui présente l'un des deux côtés périphériques (73a, 73b), dans lequel l'au moins une sauterelle de bridage (90a, 90b) est en liaison fonctionnelle avec l'au moins un boulon de positionnement (74a, 74b), de telle sorte que lors du mouvement relatif entre l'unité de positionnement (30) et l'unité d'actionnement (60), l'au moins un boulon de positionnement (74a, 74b) dans la direction radiale (R) provoque, au moyen de l'au moins une sauterelle de bridage (90a, 90b), un mouvement du côté périphérique (73a, 73b) de l'au moins un boulon de positionnement (74a, 74b) dans la direction radiale (R) vers l'autre côté périphérique (73a, 74b), afin de masquer et de serrer dans la direction radiale (R) les agencements en épingle à cheveux (14) reçus dans les ouvertures (80a, 80b, 80c, 80d).

6. Dispositif (1) selon l'une quelconque des revendications 4 ou 5, dans lequel le dispositif (1) présente un cadre (110), qui est solidaire de l'unité d'actionnement (60), dans lequel l'au moins une sauterelle de bridage (90a, 90b) est solidaire du cadre (110).

7. Dispositif (1) selon l'une quelconque des revendications 2 à 6, dans lequel l'unité de masquage (70) présente au moins une entretoise (76a, 76b, 76c), qui est disposée entre les côtés périphériques (73a, 73b), et conçue pour être positionnée dans les fentes annulaires (18a, 18b) et pour serrer les agencements en épingle à cheveux (14) reçus dans les ouvertures (80a, 80b, 80c, 80d) dans la direction radiale (R).

8. Dispositif (1) selon la revendication 7, dans lequel les entretoises (76a, 76b, 76c) sont disposées dans la direction radiale (R) avec un jeu sur l'unité de masquage (70) .

9. Dispositif (1) selon l'une quelconque des revendications précédentes, dans lequel
(a) la deuxième unité de couplage (50) présente au moins un deuxième élément de couplage (52a, 52b),
(b) l'unité d'actionnement (60) est réalisée avec au moins une surface de butée (64a, 64b), dans lequel l'unité de positionnement (30) est réalisée de manière mobile par rapport à l'unité d'actionnement (60) dans la direction axiale (A), et
(c) l'unité de masquage (70) est disposée de manière fixe sur l'unité d'actionnement (60) dans la direction axiale, et dans lequel l'unité de masquage (70) est en liaison fonctionnelle avec l'unité de positionnement (30) au moyen de l'au moins un deuxième élément de couplage (52a, 52b), de telle sorte que le mouvement relatif de l'unité de positionnement (30) dans la direction axiale (A) par rapport à l'au moins une surface de butée (64a, 64b) de l'unité d'actionnement (60) provoque le mouvement des côtés radiaux (71a, 71b) l'un vers l'autre dans la direction circonférentielle (U), afin de masquer et de serrer dans la direction circonférentielle (U) des agencements en épingle à cheveux (14) reçus dans les ouvertures (80a, 80b, 80c, 80d).

10. Dispositif (1) selon la revendication 9, dans lequel le au moins un deuxième élément de couplage (52a, 52b) s'étend depuis l'unité de positionnement (30) dans la direction axiale (A) vers l'unité de masquage (70).

11. Dispositif (1) selon la revendication 9 ou 10, dans lequel l'au moins un deuxième élément de couplage (52a) est réalisé comme un guide à coulisse avec au moins un premier guide (56a, 56b), dans lequel est guidé au moins un boulon de guidage (82a, 82b) de l'unité de masquage (70).

12. Dispositif (1) selon la revendication 11, dans lequel le au moins un boulon de guidage (82a, 82b) est relié à une première paroi radiale interne (72a) de deux parois radiales internes (72a, 72b) opposées l'une à l'autre dans la direction circonférentielle (U) de l'unité de masquage (70), dans lequel les parois radiales internes (72a, 72b) sont conçues pour être positionnées dans les fentes radiales (20), et dans lequel la première paroi radiale interne (72a) des deux parois radiales internes (72a, 72b) présente un premier côté radial (71a) des deux côtés radiaux (71a, 71b) et une deuxième paroi radiale interne (72b) des deux parois radiales internes (72a, 72b) présente un deuxième côté radial (71b) des deux côtés radiaux (71a, 71b).

13. Dispositif (1) selon la revendication 12, dans lequel le au moins un premier guide (56a, 56b) présente une extension principale dans une direction axiale opposée (A), dans lequel le au moins un premier guide (56a, 56b) est incliné le long de son extension principale dans la direction circonférentielle (U), de sorte que le mouvement relatif de l'unité de positionnement (30) dans la direction axiale (A) vers la au moins une surface de butée (64a, 64b) de l'unité d'actionnement (60) déplace le au moins un boulon de guidage (82a, 82b) guidé dans le au moins un premier guide (56a, 56b) et déplace ainsi la première paroi radiale interne (72a, 72b) reliée à l'au moins un boulon de guidage (82a, 82b) dans la direction circonférentielle (U) vers la deuxième paroi radiale interne (72a, 72b).

14. Dispositif (1) selon l'une quelconque des revendications 12 ou 13, dans lequel l'unité de masquage (70) présente au moins une paroi radiale externe (78a, 78b), qui est espacée dans la direction circonférentielle (U) de l'une des deux parois radiales internes (72a, 72b) d'une rangée (17) d'agencements en épingle à cheveux (14) orientée radialement, de sorte qu'elle peut être positionnée dans une fente radiale (20) adjacente à la fente radiale (20) entre les deux parois radiales internes (72a, 72b), dans lequel un canal de refroidissement (84) est réalisé dans la au moins une paroi radiale externe (78a, 78b) pour refroidir les agencements en épingle à cheveux (14) dans la rangée (17) orientée radialement entre l'une des deux parois radiales internes (72a, 72b) et la au moins une paroi radiale externe (78a, 78b) .

15. Dispositif (1) selon l'une quelconque des revendications précédentes, dans lequel l'unité de positionnement (30) est réalisée pour être déplaçable dans la direction axiale (A) par rapport à l'unité d'actionnement (60) au moyen d'au moins deux vérins (56a, 56b, 56c, 56d) déplaçables linéairement à l'intérieur de l'unité d'actionnement (60).

16. Dispositif (1) selon l'une quelconque des revendications précédentes, dans lequel l'unité de positionnement (30) présente une ouverture de soudage (32) pour un appareil de soudage pour effectuer une opération de soudage sur les agencements en épingle à cheveux (14) reçus dans les ouvertures (80a, 80b, 80c, 80d).

17. Procédé pour relier une section supérieure (22) d'agencements en épingle à cheveux (14), notamment de paires en épingle à cheveux, d'un stator (10) au moyen d'une opération de soudage, dans lequel le procédé présente les étapes consistant à :
(a) masquer et positionner simultanément les agencements en épingle à cheveux (14) en utilisant un dispositif (1) selon l'une quelconque des revendications précédentes, dans lequel un abaissement du dispositif (1) par rapport au stator (10) et ensuite un mouvement relatif entre l'unité de positionnement (30) et l'unité d'actionnement (60) s'effectue dans la direction axiale (A), de sorte qu'au moins les sections supérieures (22) des agencements en épingle à cheveux (14) sont reçues dans les ouvertures (80a, 80b, 80c, 80d) de l'unité de masquage (70) du dispositif (1),
(b) effectuer le processus de soudage, et
(c) retirer le dispositif (1) dans la direction axiale (A) opposée.

18. Système avec
(a) un rotor (10) comprenant des agencements en épingle à cheveux (14), et
(b) un dispositif selon l'une quelconque des revendications 1 à 16, dans lequel des sections supérieures (22) des agencements en épingle à cheveux (14) sont reçues dans les ouvertures (80a, 80b, 80c, 80d) de l'unité de masquage (70) du dispositif (1), de sorte que les agencements en épingle à cheveux (14) reçus chacun dans l'une des ouvertures (80a, 80b, 80c, 80d) peuvent être soudés ensemble.
